Europäisches Patentamt

European Patent Office

Office européen des brevets

(11) Publication number: **0 035 803**
**B1**

## (12) EUROPEAN PATENT SPECIFICATION

(45) Date of publication of patent specification: **06.03.85**

(21) Application number: **81200103.0**

(22) Date of filing: **27.03.79**

(60) Publication number of the earlier application in accordance with Art. 76 EPC: **0 004 476**

(51) Int. Cl.⁴: **G 11 B 7/08**, **G 11 B 7/00**, **G 11 B 19/28**, **G 05 D 13/62**

(54) Disc spindle servo system.

(30) Priority: **27.03.78 US 890670**

(43) Date of publication of application:
**16.09.81 Bulletin 81/37**

(45) Publication of the grant of the patent:
**06.03.85 Bulletin 85/10**

(84) Designated Contracting States:
**BE CH DE FR GB IT NL SE**

(56) References cited:
**DE-A-2 521 821**
**DE-A-2 711 920**
**US-A-3 934 262**
**US-A-3 974 327**

**RADIO FERNSEHEN ELEKTRONIK, Vol. 27 No. 2, 1978 Berlin "Direktangetriebenes Plattenspielerlaufwerk mit quarzkonstantem Bezugssignal und mit Phasenverriegelung" page 132**

**Information Display, Vol. 12, No. 2, April 1976, pages 17-19**

(73) Proprietor: **DISCOVISION ASSOCIATES**
**3300 Hyland Avenue**
**Costa Mesa California 92626 (US)**

(72) Inventor: **Ceshkovsky, Ludwig**
**10435 Morning Glory Avenue**
**Fountain Valley California (US)**
Inventor: **Dakin, Wayne Ray**
**816, Camino Real No. 20**
**Redondo Beach California (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates to spindle servo systems for use in a player apparatus for recovering information recorded on an information bearing disc surface, such as a video disc.

The present application is one of a series of related cases having some disclosure in common; all are concerned with aspects of reading optical discs. The cases are EP—A—4 476 (the parent case) and divisional applications EP—A—35 287, EP—A—35 288, EP—A—35 803, EP—A—36 222. EP—A—4 476 is concerned with correcting time base errors by comparing the phase of a signal from the disc with a reference signal and moving the impingement location of the readout beam on the disc in a direction along the track to counteract the errors; the result of the comparison is altered in response to the radial location of the beam. EP—A—35 287 is concerned with correction for the non-uniform gain of the optical system used during reading; a reference signal of predetermined amplitude and lying in a first portion of the recorded frequency spectrum is detected on read-out and compared with a further reference amplitude to give an error signal, the latter being used to control a frequency selective variable gain amplifier and thus compensate for incorrect gain in other portions of the recorded frequency spectrum. EP—A—35 288 is concerned with track changing, a track following loop being disconnected before a jump signal is applied to the beam steering means and a compensation signal being applied to that means to decelerate the beam as it approaches the desired track; the track following loop is reconnected before that track is reached, so as to co-operate with the compensation signal. As explained later, the present EP—A—35 803 concerns a disc rotation spindle servo system having a spindle tachometer and a reference frequency source. EP—A—36 222 is concerned with focus acquisition in a focus system using both focus and information detectors; it imposes a relatively high frequency oscillation on the movement of the focusing lens when focus is being sought.

An object of the present invention is to provide a spindle servo system for controlling the speed of rotation of a spindle carrying a video or other disc. In the preferred embodiment the desired speed is 1799.1 revolutions per minute, and in one revolution of the video disc, a complete frame of television information is read from the video disc, processed in an electronic portion of the video disc player and applied to a standard television receiver and/or television monitor in an acceptable form.

According to the invention, a spindle servo system as set out in the first part of claim 1 is characterized in that the spindle tachometer has two independent elements for producing first and second spindle tachometer signals, each indicative of the actual angular rate of rotation of the spindle motor, the comparator includes respective means for separately comparing the first and second spindle tachometer signals with the spindle reference signal to produce first and second error signals representative of the detected differences therebetween, and the comparator further includes means for summing together the first and second error signals to produce a spindle motor control signal for coupling to the spindle motor to produce the desired angular rate of rotation.

Preferably the two tachometer elements are arranged so that the first and second tachometer signals are displaced in phase by 180°.

Preferably the spindle servo system achieves the accurate speed of rotation by comparing the actual speed of rotation with a motor reference frequency which in the case of a colour video signal is derived from the colour subcarrier frequency. By utilising the colour subcarrier frequency as the source of the motor reference signal, the spindle motor can itself remove fixed time base errors which arise from a mismatching of the recording speed with the playback speed. The recording speed is also controlled by the colour frequency subcarrier frequency. The use of a single highly controlled frequency in both the recording mode and the reading back mode removes the major portion of time base error. While the colour subcarrier frequency is shown as the preferred source in generating the motor reference frequency, other highly controlled frequency signals can be used in controlling the writing and reading of frequency modulated video signals on the video disc.

The invention may be carried into practice in various ways, and one embodiment will be described by way of example, with reference to the accompanying drawings in which:—

FIGURE 1 is identical with FIGURE 1 of the parent application and is a generalised block diagram of a video disc player;

FIGURE 2 is a schematic diagram of the optical system employed in the video disc player shown in FIGURE 1; and is identical with FIGURE 2 of the patent application;

FIGURE 3 is a generalised block diagram of the spindle servo subsystem shown at 50 in FIGURE 1; and

FIGURE 4 is a block diagram of the tangential servo subsystem shown at 80 in FIGURE 1 and described in EP—A—4476. It is referred to here merely because it is the source of a spindle reference signal at 94 for use in the circuit of FIGURE 3.

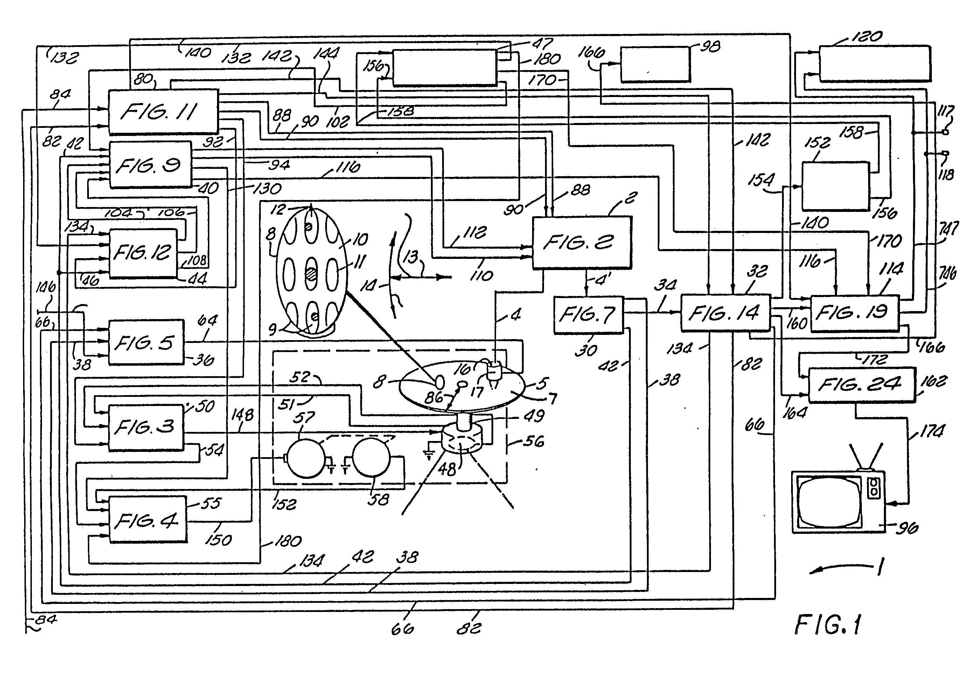

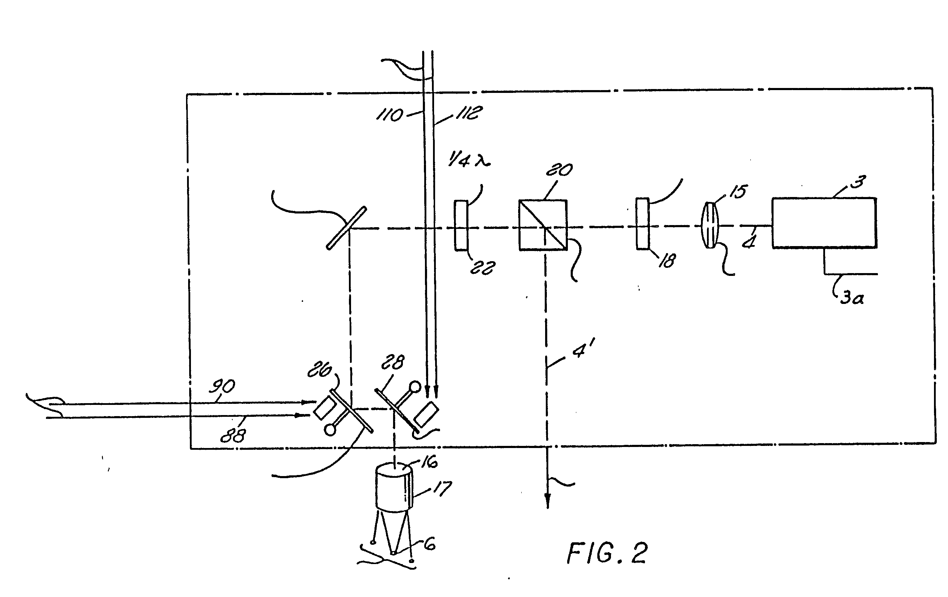

Referring to FIGURE 1, there is shown a schematic block diagram of a video disc player system indicated generally at 1. The player 1 employs an optical system indicated at 2 and shown in greater detail in FIGURE 2.

Referring collectively to FIGURES 1 and 2, the optical system 2 includes a read laser 3 employed for generating a read beam 4 which is used for reading a frequency modulated encoded signal stored on a video disc 5. The read beam 4 is polarised in a predetermined direction. The read beam 4 is directed to the video disc 5 by the optical system 2. An additional function of the optical system 2 is to focus the light beam down to a spot 6 at its point of impingement with the video disc 5.

A portion of an information bearing surface 7 of the video disc 5 is shown enlarged within a circle 8. A plurality of information tracks 9 are formed on the video disc 5. Each track is formed with successive light reflective regions 10 and light non-reflective regions 11. The direction of reading is indicated by an arrow 12. The read beam 4 has two degrees of movement, the first of which is in the radial direction as indicated by a double headed arrow 13; the second of which is the tangential direction as indicated by a double headed arrow 14. The double heads of each of the arrows 13 and 14 indicate that the read beam 4 can move in both directions in each of the radial and tangential directions.

Referring to FIGURE 2, the optical system comprises a lens 15 employed for shaping the beam to fully fill an entrance aperture 16 of a microscopic objective lens 17. The objective lens is employed for forming the spot 6 of light at its points of impingement with the video disc 5. Improved results have been found when the entrance aperture 16 is overfilled by the reading beam 4. This results in maximum light intensity at the spot 6.

For further details of the apparatus of FIGURE 1, reference may be made to publication No. 4476.

Upon receipt of a START pulse generated in a function generator 47, the first function of the video disc player 1 is to activate the laser 3 and activate a spindle motor 48, causing an integrally attached spindle 49 and its video disc 5 mounted thereon to begin spinning. The speed of rotation of the spindle 49, as provided by the spindle motor 48, is under the control of a spindle servo subsystem 50 whose power output is applied to the motor over a line 148. A spindle tachometer (not shown) is mounted relative to the spindle 49 to generate electrical signals showing the present speed of rotation of the spindle 49. The tachometer comprises two elements which are located one hundred and eighty degrees apart with reference to the spindle 49. Each of these tachometer elements generates an output pulse once per revolution. Because they are located one hundred and eighty degrees out of phase with each other, the electrical signals generated by each are one hundred and eighty degrees out of phase with each other. A line 51 carries the sequence of pulses generated by the first tachometer element to the spindle servo subsystem 50. A line 52 carries the tachometer pulses from the second tachometer element to the spindle servo subsystem 50. When the spindle servo subsystem 50 reaches its predetermined rotational velocity of 1799.1 revolutions per minute, it generates a player enable signal on a line 54. The accurate rotational speed of 1799.1 revolutions per minute allows 30 frames of television information to be displayed on a standard television receiver.

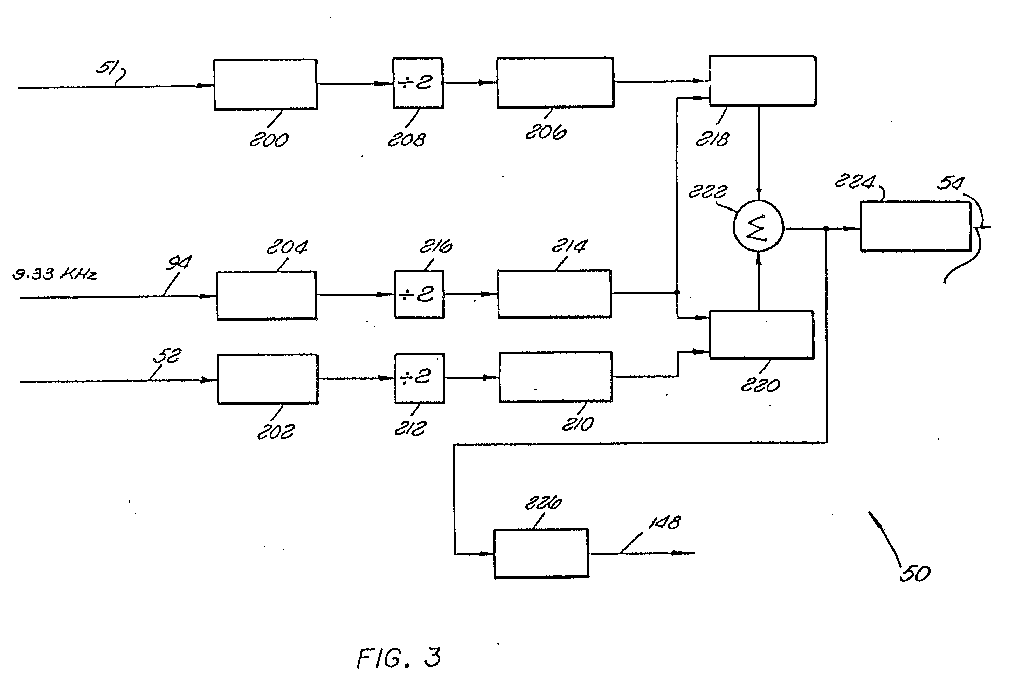

FIGURE 3 is a generalised block diagram of the spindle servo subsystem 50 for maintaining the speed of rotation at the constant speed of 1799.1 rpm. Obviously this figure has been selected to be compatible with the scanning frequency of a standard television receiver. The standard television receiver receives 30 frames per second and the information is recorded on the video disc such that one complete frame of television information is contained in one spiral and/or track. If the time requirements of a television receiver or television monitor differed from this standard, then the maintained rotational speed could be correspondingly different.

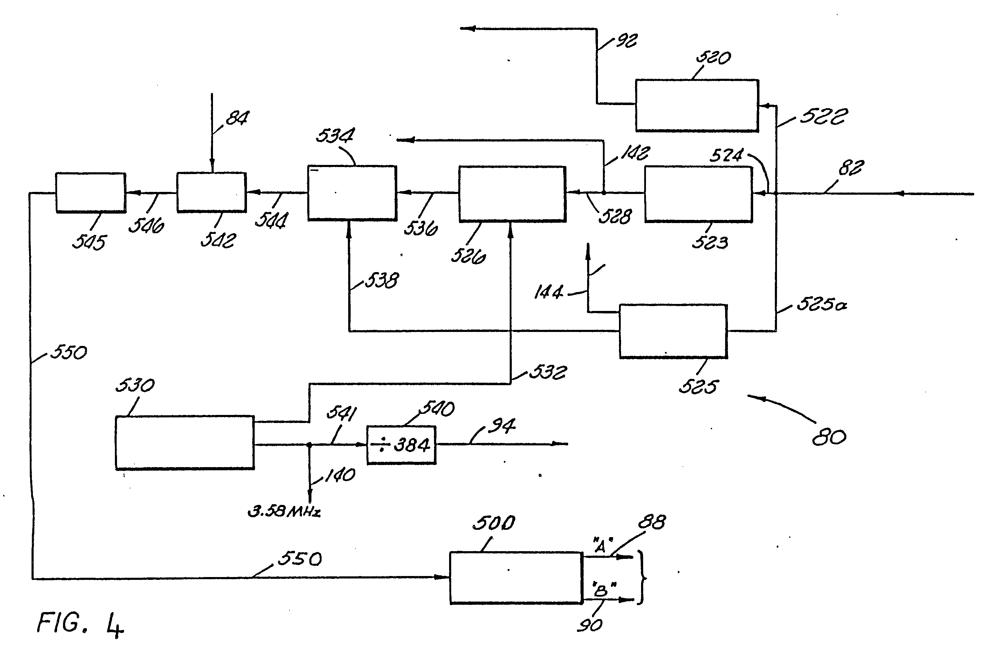

A reference signal is derived from the tangential servo system 80 which is shown in FIGURE 4 (which is identical with FIGURE 11 of the parent application where its operation is fully described). It is sufficient here to know that a colour subcarrier oscillator 530 applies the colour subcarrier frequency to the audio processing subsystem 114 over the line 140. The colour subcarrier oscillator circuit 530 supplies the colour subcarrier frequency to a divide circuit 540 over a line 541 which divides the colour subcarrier frequency by three hundred and eighty-four for generating the motor reference frequency. The motor reference frequency signal is applied to the spindle servo subsystem 50 over the line 94.

At a START pulse, as the motor begins to turn, the tachometer input signal pulse train from the first tachometer element is applied to a Schmitt trigger 200 over the line 51. The tachometer input signal pulse train from the second tachometer element is applied to a second Schmitt trigger 202 over the line 52. A 9.33 KHz motor reference frequency is applied to a third Schmitt trigger 204 from the tangential servo subsystem 80 over a line 94.

The output from the Schmitt trigger 200 is applied to an edge generator circuit 206 through a divide by two network 208. The output from the Schmitt trigger 202 is applied to an edge generator 210 through a divide by two network 212. The output from the Schmitt trigger 204 is applied to an edge generator circuit 214 through a divide by two network 216. Each of the edge generators 206, 210 and 214 is employed for generating a sharp pulse corresponding to both the positive going edge and the negative going edge of the signal applied respectively from the divide by two networks 208, 212 and 216.

The output from the edge generator 214 is applied as the reference phase signal to a first phase detector 218 and to a second phase detector 220. The phase detector 218 has as its second input signal the output from the edge generator 206. The phase generator 220 has as its second input signal the output of the edge generator 210. The phase detectors operate to indicate any phase difference between the tachometer input signals and the motor reference frequency. The output from the phase detector 218 is applied to a summation circuit 222, and the output from the phase detector 220 is also applied as a second input to the summation circuit 222. The output from the summation circuit 222 is applied to a lock detector 224 and to a power amplifier 226. The function of the lock detector 224 is to indicate on line 54 when the spindle speed has reached a predetermined rotational speed. This can be done by sensing the output signals from the summation circuit 222.

In the preferred embodiment it has been determined that the rotational speed of the spindle motor should reach a predetermined speed before the carriage assembly is placed in motion. When a video disc is brought to a relatively high rotational speed, the disc rides on a cushion of air and rises slightly vertical against the force of gravity. Additionally, the centrifugal force of the video disc causes the video disc to flatten considerably. It has been found that the vertical movement against gravity caused by the disc riding on a cushion of air and the vertical rise caused by the centrifugal force both lift the video disc from its position at rest to a stabilized position spaced from its initial rest position and at a predetermined position with reference to other internal fixed members of the video disc player cabinet. The dynamics of a spinning disc at 1799.1 rpm with a predetermined weight and density can be calculated such as to ensure that the disc is spaced from all internal components and is not in contact with any such internal components. Any contact between the disc and the player cabinet causes rubbing, and the rubbing causes damage to the video disc through abrasion.

In the preferred embodiment, the lock detector 224 has been set to generate a PLAYER ENABLE pulse on the line 54 when the spindle speed is up to its full 1799.1 rpm speed. A speed less than the full rotational speed can be selected as the point at which the player enable signal is generated provided that the video disc has moved sufficiently from its initial position and has attained a position spaced from the internal components of the video disc player cabinet. In an alternate embodiment, a fixed delay, after applying the START signal to the spindle motor, is used to start the carriage assembly in motion.

During the normal operating mode of the video disc player 1, the tachometer input signals are continuously applied to the Schmitt triggers 200 and 202 over the lines 51 and 52, respectively. These actual tachometer input signals are compared against the motor reference signal and any deviation therefrom is detected in the summation circuit 222 for application to the power amplifier 226. The power amplifier 226 provides the driving force on line 148 to the spindle motor 48 to maintain the required rotational speed of the spindle 49.

## Claims

1. A spindle servo system in an apparatus for recovering an information signal from an information track arranged on an information bearing surface of a disc (5) wherein the information signal includes a signal defining a time base, and the apparatus includes optical system means (2) for directing a source beam of radiation to the information track and for directing a modulated beam of radiation containing the information signal to signal recovery means for recovering the information signal from the modulated beam; the spindle servo system comprising a spindle motor (48) for rotating the disc to impart relative motion between the disc and the source beam and thereby produce the modulated beam, spindle reference signal means for producing a spindle reference signal (94) representing a desired angular rate of rotation of the spindle motor a spindle tachometer coupled to the spindle motor for indicating the actual angular rate of rotation of the spindle motor and a comparator for comparing the desired rate with the actual rate, characterised in that the tachometer includes two independent elements for producing first (51) and second (52) spindle tachometer signals, each indicative of the actual angular rate of rotation of the spindle motor, the comparator includes respective means (218 and 220) for separately comparing the first and second spindle tachometer signals with the spindle reference signal to produce first and second error signals representative of the detected differences therebetween and the comparator further includes means (222) for summing together the first and second error signals to produce a spindle motor control signal for coupling to the spindle motor to produce the desired angular rate of rotation.

2. A spindle servo system as set forth in Claim 1 wherein the first and second spindle tachometer signals both have frequencies indicative of the actual angular rate of rotation of the spindle motor the spindle reference signal has a frequency representing the desired angular rate of rotation of the spindle motor means, and the comparator comprises phase detection means for detecting the relative phase relationships of such signals.

3. A spindle servo system as set forth in Claim 2, wherein the information signal includes a colour video signal, and the reference signal means comprises a colour subcarrier oscillator and divider means for dividing the colour subcarrier to produce the reference signal having a frequency representing the desired angular rate of rotation.

4. A spindle servo system in an apparatus as set forth in Claim 3 wherein the colour subcarrier oscillator is the sole source of the spindle reference signal, whereby fixed errors in the time base of the information signal recovered from the modulated beam are prevented.

5. A spindle servo system as set forth in any preceding claim in which the two tachometer elements are arranged so that the first and second tachometer signals are displaced in phase by 180°.

## Patentansprüche

1. Servosystem für einen Plattenspeicher-Spindelmotor in einem Gerät für die Wiedergewinnung eines Informationssignals von einer Informationsspur, die sich auf einer die Information tragenden Fläche einer Platte (5) befindet, wobei das Informationssignal ein Signal umfaßt, das eine Zeitbasis definiert, und das Gerät ein optisches System (2) umfaßt, das einen von einer Quelle herkommenden Lichtstrahl auf die Informationsspur und einen das Informationssignal enthaltenden modulierten Lichtstrahl zu einer Einrichtung zum Wiedergewinnen des Signals leitet, um das Informationssignal von dem modulierten Strahl wiederzugewinnen, wobei ferner das Servosystem einen Spindelmotor (48) aufweist, der die Platte in Drehung versetzt, um eine Relativbewegung zwischen der Platte und dem von der Quelle kommenden Lichtstrahl herbeizuführen und auf diese Weise den modulierten Strahl zu erzeugen, sowie eine Spindelbezugssignaleinrichtung zum Erzeugen eines Spindelbezugssignals (94), das einen Sollwert der Winkelgeschwindigkeit des Spindelmotors verkörpert, ein mit dem Spindelmotor gekoppeltes Spindeltachometer zum Anzeigen des Istwerts der Winkelgeschwindigkeit des Spindelmotors und einen Komparator zum Vergleichen des Sollwerts der Geschwindigkeit mit dem Istwert der Geschwindigkeit, dadurch gekennzeichnet, daß das Tachometer zwei unabhängige Elemente enthält zum Erzeugen eines ersten (51) bzw. zweiten (52) Spindeltachometersignals, das jeweils den Istwert der Winkelgeschwindigkeit des Spindelmotors anzeigt, daß der Komparator eine Einrichtung (218 bzw. 220) zum getrennten Vergleichen des ersten bzw. des zweiten Spindeltachometersignals mit dem Spindelbezugssignal aufweist, um erste bzw. zweite Fehlersignale abzuleiten, die kennzeichnend sind für die nachgewiesenen Differenzen zwischen ihnen, und daß der Komparator außerdem eine Einrichtung (222) aufweist, die das erste und das zweite Fehlersignal summiert, um ein Spindelmotor-Steuersignal zu erzeugen zum Koppeln mit dem Spindelmotor, damit der Sollwert der Winkelgeschwindigkeit erzeugt wird.

2. Servosystem für einen Plattenspeicher-Spindelmotor, nach Anspruch 1, dadurch gekennzeichnet, daß das erste und das zweite Spindeltachometersignal jeweils Frequenzen zeigen, die kennzeichnend sind für den Istwert der Winkelgeschwindigkeit des Spindelmotors, daß das Spindelbezugssignal eine Frequenz hat, die für den Istwert der Winkelgeschwindigkeit der Spindelmotoreinrichtung kennzeichnend ist, und daß der Komparator eine Phasendetektoreinrichtung aufweist, die die Phasenbeziehung dieser Signale ermittelt.

3. Spindelservosystem nach Anspruch 2, dadurch gekennzeichnet, daß das Informationssignal ein Farbvideosignal enthält, und daß die Bezugssignaleinrichtung einen Farbträgeroszillator sowie eine Teilereinrichtung zum Zerlegen des Farbträgers für die Erzeugung des Bezugssignals aufweist, das eine Frequenz besitzt, die den Sollwert der Winkelgeschwindigkeit darstellt.

4. Spindelservosystem in einem Gerät nach Anspruch 3, dadurch gekennzeichnet, daß der Farbträgeroszillator die einzige Quelle für das Spindelbezugssignal darstellt, wodurch feste Fehler in der Zeitbasis des von dem modulierten Strahl wiedergewonnenen Informationssignals ausgeschlossen werden.

5. Spindelservosystem nach einem der vorhergehenden Ansprüche, dadurch gekennzeichnet, daß die beiden Tachometerelemente so angeordnet sind, daß das erste und das zweite Tachometersignal um 180° gegeneinander phasenverschoben sind.

**Revendications**

1. Servo-système d'arbre moteur dans un dispositif pour restituer un signal d'information d'une piste d'information agencée sur une surface porteuse d'information d'un disque (5) où le signal d'information comprend un signal définissant une base de temps, et le dispositif comprend un moyen formant système optique (2) pour diriger un faisceau de source de rayonnement à la piste d'information et pour diriger un faisceau modulé de rayonnement contenant le signal d'information au moyen de restitution du signal pour restituer le signal d'information du faisceau modulé; le servo-système comprenant un moteur (48) de l'arbre pour entraîner en rotation le disque pour impartir un mouvement relatif entre le disque et le faisceau de source et produire ainsi le faisceau modulé, un moyen produisant un signal de référence (94) de l'arbre moteur représentant une vitesse angulaire souhaitée de rotation du moteur de l'arbre, un tachymètre de l'arbre relié au moteur pour indiquer la vitesse angulaire réelle de rotation du moteur et un comparateur pour comparer la vitesse souhaitée à la vitesse réelle, caractérisé en ce que le tachymètre comprend deux éléments indépendants pour produire des premier (51) et second (52) signaux du tachymètre, chacun indiquant la vitesse angulaire de rotation du moteur, le comparateur comprend des moyens respectifs (218 et 220) pour comparer séparément les premier et second signaux du tachymètre au signal de référence de l'arbre pour produire des premier et second signaux d'erreur représentatifs des différences détectées entre eux et le comparateur comprend de plus un moyen (222) pour additionner ensemble les premier et second signaux d'erreur pour produire un signal de réglage du moteur pour couplage au moteur pour produire la vitesse angulaire souhaitée de rotation.

2. Servo-système selon la revendication 1, caractérisé en ce que les premier et second signaux du tachymètre ont tous les deux des fréquences indiquant la vitesse angulaire réelle de rotation du moteur, le signal de référence de l'arbre a une fréquence représentant la vitesse angulaire souhaitée de rotation du moteur, et le comparateur comprend un moyen de détection de phase pour détecter les relations de phase relatives de tels signaux.

3. Servo-système selon la revendication 2, caractérisé en ce que le signal d'information comprend un signal vidéo couleur, et le moyen de production du signal de référence comprend un oscillateur de sous-porteuse couleur et un moyen diviseur pour diviser la sous-porteuse couleur pour produire le signal de référence ayant une fréquence représentant la vitesse angulaire souhaitée de rotation.

4. Servo-système selon la revendication 3, caractérisé en ce que l'oscillateur de sous-porteuse couleur est la seule source du signal de référence de l'arbre, ainsi des erreurs fixes dans la base de temps du signal d'information restitué à partir du faisceau modulé sont empêchées.

5. Servo-système selon l'une des revendications précédentes, caractérisé en ce que les deux éléments de tachymètre sont agencés de sorte que les premier et second signaux de tachymètre soient décalés en phase de 180°.

FIG.1

FIG. 2

0 035 803

FIG. 3

9.33 KHz

FIG. 4

0 0035 803